(19) Europäisches Patentamt
European Patent Office
Office européen des brevets

(11) Publication number: 0 381 211 A2

(12) # EUROPEAN PATENT APPLICATION

(21) Application number: 90102005.7

(51) Int. Cl.5: G11B 7/24, G11B 7/26

(22) Date of filing: 01.02.90

(30) Priority: 01.02.89 JP 23063/89

(43) Date of publication of application:
08.08.90 Bulletin 90/32

(84) Designated Contracting States:
AT BE CH DE DK ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: Kuroiwa, Mitsuyuki
c/o MITSUI PETROCHEMICAL INDUSTRIES, LTD.
3 Chigusa-Kaigan, Ichihara-shi, Chiba(JP)
Inventor: Miyazaki, Shuji, c/o TOYO INK MFG. CO., LTD.
3-13, Kyobashi 2-chome, Chuo-ku
Tokyo(JP)
Inventor: Sakamoto, Makoto, c/o TOYO INK MFG. CO., LTD.
3-13, Kyobashi 2-chome, Chuo-ku
Tokyo(JP)
Inventor: The other inventor has agreed to waive his entitlement to designation

(74) Representative: Hansen, Bernd, Dr.rer.nat. et al
Hoffmann, Eitle & Partner Patentanwälte
Arabellastrasse 4 Postfach 81 04 20
D-8000 München 81(DE)

(54) ## Optical recording media.

(57) The optical recording media disclosed therein comprise an optical recording layer containing a phthalocyanine or a naphthocyanine dye or a mixture thereof and a layer for inhibiting the deformation of said optical recording layer in this order provided on a transparent substrate. Reading to the optical recording media of the present invention can be repeatedly made with a stable signal intensity even when recording laser power is low.

EP 0 381 211 A2

# OPTICAL RECORDING MEDIA

## FIELD OF THE INVENTION

This invention relates to optical recording media wherein the aggregation state of molecule in a recording layer is changed by irradiation with laser beam to write and read out information.

## BACKGROUND OF THE INVENTION

Known in the art are many optical recording media wherein the writing and readout of information are carried out by irradiation with laser beam. Of these recording media, there are known optical recording media wherein a recording layer provided on a substrate is irradiated with laser beam to cause change such as fusion, evaporation, decomposition, etc., in the irradiated area and to thereby carry out recording.

For example, optical recording media comprising a transparent substrate and a recording layer composed of an organic dye thin film layer supported on said substrate are disclosed in Japanese Patent Laid-Open Publications Nos. 82093/1982, 56892/1983, 89842/1985 and 150243/1985. In these optical recording media, the writing and readout of information are carried out by irradiation with laser beam of a relatively long wavelength such as 780 nm or longer. In such optical recording media, fine concavities (pits) can be easily formed on the optical recording layer by fusing, evaporating or decomposing organic dyes by irradiation with semiconductor laser.

However, the above-mentioned optical recording media have such a problem that when recording is repeatedly made on the media, recording characteristics are greatly lowered, since recording is made by forming pits which cause changes in the form of the recording layer. Further, they have such problems that high laser power is required to obtain a stable signal intensity and sensitivity is poor.

With the view of solving such problems as mentioned above, the present inventors have eagerly studied and fcund that in an optical recording medium comprising an optical recording layer containing a phthalocyanine type dye, a naphthalocyanine type dye or a mixture thereof and a layer for inhibiting the deformation of said optical recording layer in this order provided on a transparent substrate, recording can be made not by forming pits (holes) but by changing the aggregation state of said dye when the optical recording layer is irradiated with recording laser and hence such a medium is excellent in repeating recording characteristics and stable signal intensity can be obtained even when recording laser power is low. The present invention has been accomplished on the basis of this finding.

## OBJECT OF THE INVENTION

The present invention is intended to solve such problems associated with the prior art as mentioned above and an object of the present invention is to provide optical recording media in which when the optical recording layer is irradiated with recording laser, recording is made not by forming pits (holes) on the optical recording layer but by changing the aggregation state of a dye in the optical recording layer and stable signal intensity can be obtained even when the recording laser power is fluctuated.

## SUMMARY OF THE INVENTION

The optical recording media of the present invention comprise an optical recording layer containing a phthalocyanine dye, a naphthalocyanine dye or a mixture thereof and a layer for inhibiting the deformation of said optical recording layer in this order provided on a transparent substrate.

## BRIEF DESCRIPTION OF THE DRAWING

Figure 1 is a graph illustrating the relationship between signal intensity and recording laser power in the optical recording media of the present invention and that of Comparative Example.

## DETAILED DESCRIPTION OF THE INVENTION

The present invention will now be illustrated in detail below.

As the transparent substrate of the present invention, there can be used substrates which are conventionally used for the optical recording media and these substrates preferably have a light transmittance of at least 85% for conducting the writing and readout of information and have low optical anisotropy. Concrete examples of materials for the substrates include glass, thermoplastic resins such as acrylic resins, polycarbonate resins, polyester resins, polyamide resins, vinyl chloride resins, vinyl acetate resins, polystyrene resins, polyolefin resins, e.g., poly-4-methylpentene, amorphous polyolefins such as those disclosed in U.S.Patent No. 4,614,778, including copolymers of ehylene with 1,4,5,8-dimethano-1,2,3,4,4a,5,8,8a-octahydronaphthalene (tetracyclododecene), copolymers of ethylene with 2-methyl-1,4,5,8-dimethano-1,2,3,4,4a,5,8,8a-octahydronaphthalene (methyltetracyclododecene) and copolymers of ethylene with 2-ethyl-1,4,5,8-dimethano-1,2,3,4,4a,5,8,8a-octahydronaphthalene (ethyltetracyclododecene), and polyether sulfone resins and thermosetting resins such as epoxy resins and allyl resins. Among them, substrates composed of amorphous polyolefin resins are preferred because many kinds of solvents for dissolving dyes can be used if the amorphous polyolefin resins are used.

There is no specific limitation with regard to the thickness of the transparent substrates. The transparent substrates may be in any form such as a sheet, a film, a circle or a card and the size thereof are not particuraly limited. The transparent substrate is generally provided with guide grooves for position control in writing or reading out information, and also provided with recess and protrusion parts for preformatting various marks or address signals. These recess and protrusion parts can be formed, for example, with a stamper in molding the above-described thermoplastic resins by injection molding, compression molding or the like.

The optical recording media of the present invention comprise an optical recording layer and a layer for inhibiting the deformation of said optical recording layer in this order provided on the afore-said transparent substrate, said recording layer containing a phthalocyanine dye, a naphthalocyanine dye or a mixture thereof.

Dyes represented by the following general formula [I] can be used as phthalocyanine dyes or naphthalocyanine dyes (hereinafter, often abbreviated to phthalo/naphthalocyanine dye).

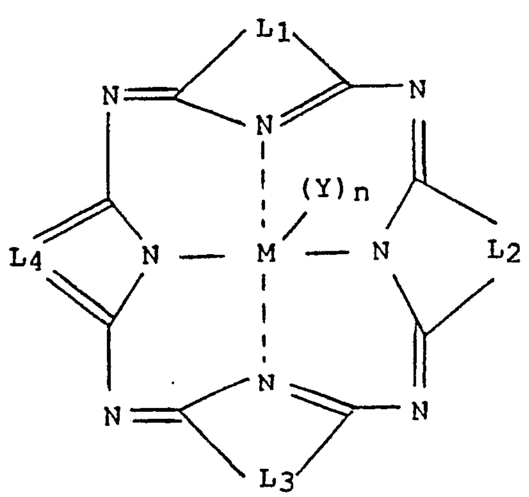

... [I]

wherein M represents a metal or semimetal, -Y represents an organic substituent group, n represents an integer of 1 or 2, and $L_1$, $L_2$, $L_3$ and $L_4$ represent each a benzene ring or naphthalene ring skeleton which is unsubstituted or substituted by one or more substituent groups (-Z).

Examples of organic substituent groups represented by -Y in the phthalo/naphthalocyanine dyes of the formula (I), which are used in the recording layer of the present invention, include groups composed of carbon and hydrogen atoms such as aliphatic hydrocarbon groups (for exmaple alkyl group and cycloalkyl

group) and aromatic hydrocarbon groups; organic substituent groups composed of carbon and hydrogen atoms and further one or more elements of oxygen, sulfur, nitrogen, silicon, halogen, boron, phosphorus, etc., such as alkyloxy group, aryloxy group, alkylthioether group, arylthioether group, alkylsiloxy group, alkoxysiloxy group, arylsiloxy group, aryloxysiloxy group, silyl group, acyl group, carboxylic acid ester group, carboxylic acid amido group, amino group, sulfonamido group, alkoxyalkyl group, aryloxyalkyl group, halogenated alkyl group, halogenated aryl group, epoxy group and vinyl group; and high-molecular organic substituent groups such as polyether group, polyamido group, polyester group, polyurethane group, polysiloxy group and polyepoxy group.

The organic substituent groups represented by -Y will be illustrated in more detail below.

Concrete examples of the aliphatic hydrocarbon groups include saturated aliphatic hydrocarbon groups such as methyl, ethyl, n-propyl, iso-propyl, n-butyl, sec-butyl, tert-butyl, iso-butyl, n-pentyl, iso-pentyl, sec-pentyl, tert-pentyl, n-hexyl, iso-hexyl, 1-methyl-1-ethylpropyl, 1,1-dimethylbutyl, n-heptyl, iso-heptyl, sec-heptyl, tert-heptyl, octyl, 2-ethylhexyl, nonyl, decyl, dodecyl, cyclohexyl and methylcyclohexyl; and unsaturated aliphatic hydrocarbon groups such as allyl, butenyl, hexenyl, octenyl, dodecenyl, cyclohexenyl and methylcyclohexenyl.

Concrete examples of the aromatic hydrocarbon groups include phenyl, methylphenyl, ethylphenyl, dimethylphenyl, butylphenyl, hexylphenyl, benzyl, phenylethyl, phenylhexyl, naphthalene, substituted naphthalene and anthracene.

Concrete examples of the alkyloxy and aryloxy groups include methoxy, ethoxy, butoxy, octoxy, dodecanoxy, allyloxy, phenoxy, dimethylphenoxy and benzyloxy.

Concrete examples of the alkylthioether and arylthioether groups include methylthio, ethylthio, butylthio, octylthio, dodecylthio, phenylthio and naphthylthio.

Concrete examples of the alkylsiloxy, alkoxysiloxy, arylsiloxy and aryloxysiloxy groups include trimethylsiloxy, triethylsiloxy, tributylsiloxy,trioctylsiloxy, triphenylsiloxy, trimethoxysiloxy, triethoxysiloxy, tributoxysiloxy, trioctoxysiloxy, triphenoxyliloxy, dimethylmethoxysiloxy, butyldimethoxysiloxy and diphenylmethoxysiloxy.

Concrete examples of the silyl group include trimethylsilyl, triethylsilyl, trioctylsilyl and triphenylsilyl.

Concrete examples of the sulfonamido group include dimethylsulfonamido, diethylsulfonamido, dibutylsulfonamido, dioctylsulfonamido, didodecylsulfonamido and diphenylsulfonamido.

Concrete examples of the acyl group include acetyl, ethylcarbonyl, butylcarbonyl, octylcarbonyl, dodecylcarbonyl and benzoyl.

Concrete examples of the carboxylic acid ester group include methoxycarbonyl, ethoxycarbonyl, butoxycarbonyl, octoxycarbonyl, dodecyloxycarbonyl and benzoyloxy.

Concrete examples of the carboxylic acid amido group include methylcarboxyamido, ethylcarboxyamido, butylcarboxyamido, octylcarboxyamido, dodecylcarboxyamido and phenylcarboxyamido.

Concrete examples of the amino group include dimethylamino, diethylamino, dibutylamino, dioctylamino, didodecylamino, diphenylamino, piperidine, piperazine, dimethylaminoethyl, dibutylaminoethyl and diphenylaminoethyl.

Concrete examples of the alkoxyalkyl and aryloxyalkyl groups include methoxymethyl, methoxyethyl, ethoxyethyl, butoxyethyl and phenoxyethyl.

Concrete examples of the halogenated alkyl and halogenated aryl groups include chloromethyl, chloroethyl, chlorobutyl, chlorooctyl, chlorododecyl, chlorophenyl, chloronaphthalene, polychloroalkyl, polychloronaphthalene, bromoethyl, bromooctyl, bromophenyl, fluoroalkyl, fluoroaryl, polyfluoroalkyl and polyfluoroaryl.

Benzene ring or naphthalene ring represented by $L_1$, $L_2$, $L_3$ and $L_4$ in the phthalo/naphthalocyanine dye of the formula [I] may be unsubstituted or substituted. When the ring is substituted, examples of substituent groups -Z include those already described above in the definition of the organic substituent group represented by -Y. In addition thereto, the substituent groups -Z include halogen, hydroxyl and mercapto groups.

M in the phthalo/naphthalocyanine dye of the formula [I] is a trivalent or polyvalent metal or semimetal. Concrete examples thereof include Group III metals such as Al, Ga, In and Tl; Group IV metals such as Si, Ge, Sn, Pb, Ti, Zr and Hf; Group V metals such as Sb, Bi, V, Nb and Ta; Group VI metals such as Se, Te, Cr, Mo and W; Group VII metals such as Mn and Tc; and Group VIII metals such as Fe, Co, Ru, Rh, Pd, Os, Ir and Pt.

The sum total of carbon atoms of the organic substituent group represented by -Y and the entire substituent groups of -Z on the benzene or naphthalene rings represented by $L_1$, $L_2$, $L_3$ and $L_4$ per molecule of the phthalo/naphthalocyanine dye of the formula [I] is preferably not less than 16, more preferably not less than 20, particularly preferably not less than 24 from the viewpoint of the solubility of the

phthalo/naphthalocyanine dye of the formula [I] in crganic solvents. Though there is no limitation with regard to the upper limit to the number of carbon atoms, the sum total of carbon atoms is preferably not more than 120 from the viewpoint of the optical characteristics of the resulting recording film.

When the benzene or naphthalene ring has the substituent group -Z, there is no particular limitation with regard to the mode of the introduction thereof into the ring. For example, the substituent groups may be introduced, on the average, into four benzene rings and/or naphthalene rings. Alternatively, one or more substituent groups may be introduced into only one benzene or naphthalene ring. There is no particular limitation with regard to bonding site. Further, the substituent groups may be the same or different.

The term "phthalo/naphthalo" dye as used herein include a compound wherein all of $L_1$ to $L_4$ in the formula [I] are either benzene rings or naphthalene rings, and both benzene and naphthalene rings.

Preferable phthalo/naphthalocyanine dye of teh formula [I] has following M, L, Y, and Z: M is a Group IV metal; L is a naphthalene ring skeleton which may have a substituent; Y is alkyloxy, alkylsiloxy, alkoxysiloxy and alkoxyalkyl; and Z is halogen or an aliphatic hydrocarbon group as mentioned in Y.

If desired, the recording layers of the optical recording media of the present invention may contain high-molecular binders. Examples of the high-molecular binders include vinyl chloride resins, acrylic resins, polyester resins, polyamide resins, polycarbonate resins, epoxy resins, methacrylate resins, vinyl acetate resins, nitrocellulose and phenolic resins. When the high-molecular binders are used, there is a possibility that stacking obstruction and thermal motion of dye molecule are caused by the high-molecular binder. Accordingly, the content of the high-molecular binder in the optical recording layer is preferably not higher than 10% by weight.

The thickness of the optical recording layer formed on the transparent substrate is not more than 10 µm, preferably 500 Å to 2 µm.

The optical recording media of the present invention comprise a layer for inhibiting the deformation of the optical recording layer provided on the optical recording layer.

The layer for inhibiting the deformation of the optical recording layer plays a role of preventing the laser-irradiated area of the optical recording medium from being deformed such as forming holes when the optical recording medium is irradiated with laser beam to carry out recording.

As the materials of the layer for inhibiting the deformation, there are used dielectrics, for example, silicon oxides such as $SiO_2$ and SiO and ZnO, silicon nitrides such as $Si_3N_4$, AlN and TiN, carbides such as SiC and TiC, thermoplastic resins, thermosetting resins, and photopolymerization resins such as ultraviolet ray polymerization resins or chalcogen compounds containing Te, Se, S or the like, semiconductor materials composed of a compound of Ge or Si and metals such as gold, silver, copper, platinum, aluminum, cobalt and nichrome.

Silicon oxides and polyolefin thermoplastic resins can be used as preferable concrete examples of the deformation-inhibiting layer material. The deformation-inhibiting layer of the present invention sometimes acts as a protective layer when prepared with certain types of material.

Of these, the dielectrics having a low thermal conductivity or semiconductor materials are particularly preferred from the viewpoint of reducing the influence of heat diffusion of laser beam.

The layer for inhibiting the deformation (the deformation-inhibiting layer) may be composed of a single layer or a laminated layer. The thickness of the deformation-inhibiting layer is 0.01 to 100 µm, preferably 0.01 to 10 µm, more preferably 0.02 to 1.0µm.

When the deformation-inhibiting layer is provided on the optical recording layer, recording can be made not by forming pits (holes) on the optical recording layer, but by changing the aggregation state of a phthalocyanine dye, a naphthalocyanine dye or a mixture thereof contained in the optical recording layer when the optical recording layer is irradiated with recording laser beam.

Further, the deformation-inhibiting layer as mentioned above can be provided between the transparent substrate and the optical recording layer in the present invention. By providing the deformation-inhibiting layer between the transparent substrate and the optical recording layer, the optical recording layer can be more effectively prevented from being deformed when the optical recording layer is irradiated with recording laser beam.

Now, a process for preparing the optical recording media of the present invention will be illustrated below.

First, the above-described phthalocyanine dye or naphthalocyanine dye or a mixture thereof is dissolved or dispersed in an organic solvent to prepare a dye solution. Organic solvents having a low boiling point of preferably not higher than 200°C, more preferably not higher than 150°C are used.

Concrete examples of the organic solvents include

(i) alcohols such as methanol, ethanol, 1-propanol, isopropanol, 1-butanol, isobutyl alcohols, tert-butyl alcohol and 1-pentanol;

(ii) ketones such as methyl ethyl ketone, acetone, methyl isobutyl ketone and cyclohexanone;

(iii) amides such as dimethylformamide and dimethylacetamide;

(iv) sulfoxides such as dimethyl sulfoxide;

(v) ethers such as diethyl ether, dipropyl ether and dibutyl ether;

(vi) esters such as ethyl acetate and propyl acetate;

(vii) aliphatic halogenated hydrocarbons such as 1,2-dichloroethane, methyl chloride, carbon tetrachloride, chloroform and dichlorobenzene; and

(viii) aromatic hydrocarbons such as benzene, toluene, xylene and ethylbenzene.

These organic solvents may be used either alone or as a mixture of two or more in a certain ratio.

If desired, the high-molecular binder may be added to the dye solution.

The transparent substrate is coated with the thus prepared dye solution and dried to remove the organic solvent from the resulting dye film, whereby the optical recording layer of the present invention can be formed. The transparent substrate can be coated with the dye solution, for example, by spin coating, dip coating or spray coating, etc.

In the present invention, the recording layer formed on the transparent substrate can be heat-treated at a temperature of from 80 to 280 °C, preferably from 100 to 250 °C by heating it from an external heat source.

The heating time greatly varies depending on the heating temperature, but is preferably from 30 seconds to 90 minutes, more preferably from 3 to 60 minutes. There is no particular limitation with regard to the method for heating the recording layer from an external heat source. The heating can be performed by using a heating oven, or contacting the recording layer with heat roller or hot plate, irradiating infrared rays to the recording layer by using an infrared lamp, or hot pressing the recording layers.

It is preferred to heat-treat the recording layer at a temperature of 80 to 280 °C as described above, because the optical characteristics and stability of the recording layer can be often improved.

Preferably, the heat-treatment of the recording layer is carried out in an inert atmosphere such as nitrogen gas or in an oxygen-containing atmosphere such as air.

After the recording layer is heat-treated at a temperature of from 80 to 280 °C, the recording layer may be exposed to the vapor of an organic solvent such as chloroform, tetrahydrofuran or toluene, whereby the absorption wavelength of the recording layer is shifted to a side of long wavelength and sensitivity to light in the region of the oscillating wavelength of semiconductor laser is remarkably improved in some cases.

The deformation-inhibiting layer is formed on the recording layer provided on the substrate, for example, by a dry film-forming process such as a vacuum deposition, a sputtering, a plasma CVD process or an ion plating process or other processes such as a spin coating, a dip coating, a spray coating or a roll coating.

Recording can be made on the thus-obtained optical recording medium by irradiating the recording layer with laser beam, preferably semiconductor laser which is converged to about 1 $\mu$m. Dye present in the area irradiated with laser beam causes change in an aggregation state, whereby information can be recorded. The reproduction of information thus recorded on the recording layer can be made by irradiating laser beam to the area having information recorded and the area having no information recorded and reading out a difference in reflectance therebetween.

In the optical recording media of the present invention, information can be written again and again by slowly irradiating the recording area with low-intensity laser beam or by irradiating it with high-intensity laser beam at a high speed. In the optical recording media of the present invention, recording can be repeatedly made by the above-described manner, since recording is made not by forming pits on the optical recording layer, but by changing the aggregation state of the dye contained in the recording layer when the optical recording layer is irradiated with recording laser.

Laser beam to be irradiated to the recording layer in reproducing information is preferably laser beam which has energy lower than that of laser beam to be irradiated to the recording layer in writing information and does not cause change in the aggregation state of the recording layer when information is reproduced.

Various laser beam sources such as He-Ne laser, Ar laser and semiconductor laser can be used when information is written on the recording layer or reproduced therefrom. However, semiconductor laser is particularly preferred from the viewpoint of cost and size. Laser having central wavelengths of 830 nm and 780 nm and shorter wavelength can be used as semiconductor laser.

As stated hereinbefore, information can be recorded to the recording layer repeatedly with a stable signal intensity even when recording laser power is low.

The present invention is illustrated below in more detail with reference to concrete examples, but it should be construed that the invention is in no way limited to the examples.

Example 1

The following dye (A) was used. Two parts by weight of the dye was dissolved in cyclohexanone. A grooved disc substrate injection-molded from ethylene/1,4,5,8-dimethano-1,2,3,4,4a,5,8,8a-octahydronaphthalene copolymer (hereinafter referred to polymer A) was coated with the resulting solution by means of a spin coating at a velocity of 800 rpm to prepare an optical recording layer having a film thickness of 1000Å. A $SiO_2$ film having a thickness of about 100 Å was formed on the recording layers by means of a sputtering process. Further, an ultraviolet curing resin was applied thereto by means of a spin coating at a velocity of 400 rpm to form a film having a thickness of 1.0 µm. The acrylic ultraviolet-curing resin (trade name of SD-101 supplied by Dainippon Ink and Chemicals Incorporated) was cured by using an ultraviolet lamp to obtain an optical recording medium.

Example 2

The procedure of Example 1 was repeated except that the following dye (B) was used to obtain an optical recording medium.

Comparative Example I

The procedure of Example 1 was repeated except that cyanine dye NK-125 (a product of Nippon Kanko Shikiso Kenkyujo KK) was used as dye and the layer for inhibiting the deformation of the optical recording layer was not formed to obtain an optical recording medium.

Dye A

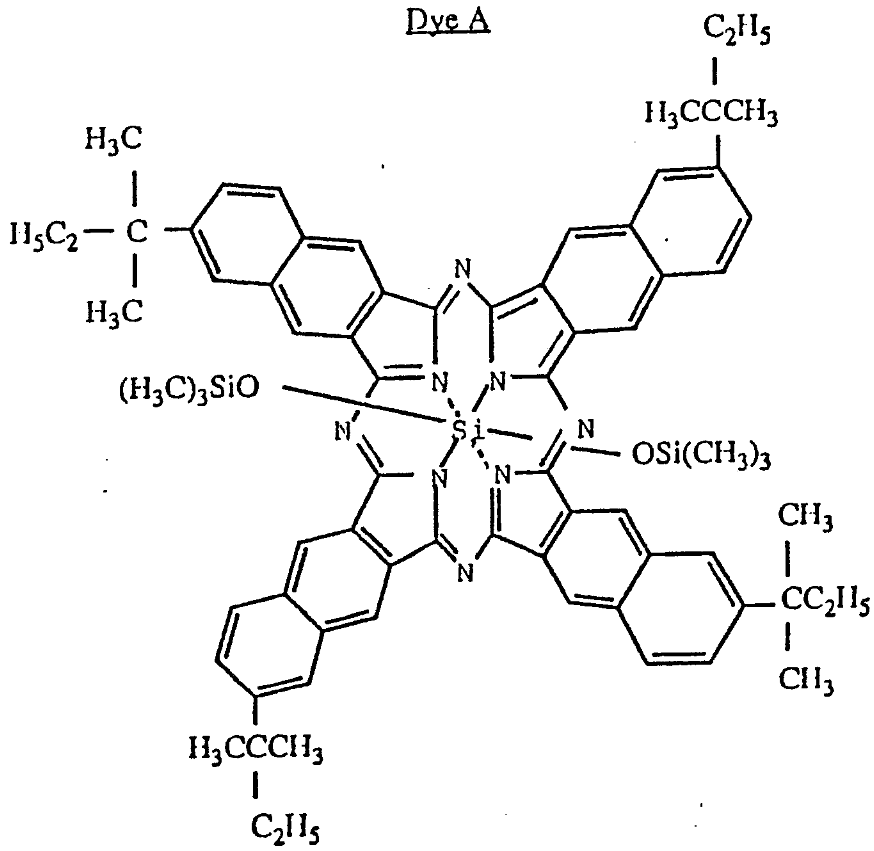

Dye B

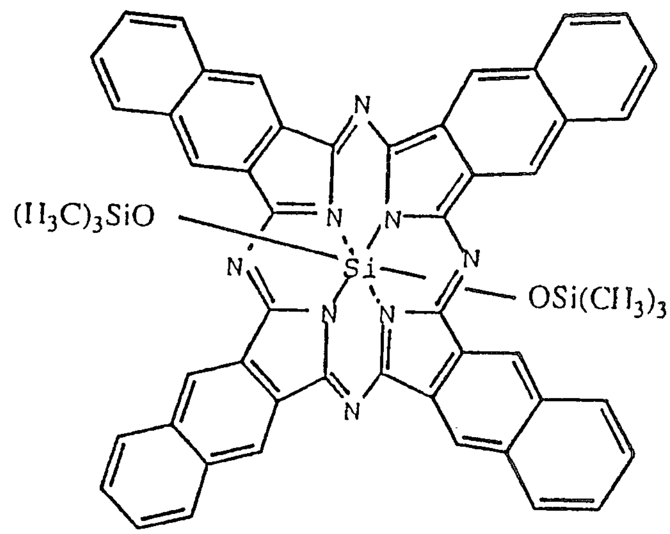

The optical recording media obtained above were evaluated in the following manner.

Example 3

An optical recording layer having a thickness of 1,000Å was formed with the following dye (A) by a procedure similar to that in Example 1 on a substrate made of the polymer A obtained by injection molding. The recording layer was coated by a roll coater at 150° C with an olefin type hot melt adhesive (trade name of MU 101 having a melt viscosity 90,000 cP at 150° C and supplied by Konishi Co. Ltd.) to form a deformation-inhibiting layer having a thickness of 50μm.

A disk made of the polymer A prepared by injection molding was further placed on the deformation-inhibiting layer and the entire body was pressed to give an poical recording medium.

Evaluation: The media were irradiated with laser beam by using semiconductor laser having a wavelength of 830 nm under such conditions that the linear velocity of the disc was 9.4 m/s, recording frequency was 1.0 MHz and recording laser power intensity was in the range of from 1 to 10 mW. Thereafter, signals were read out with a power of 0.6 mW.

The results are shown in Fig. 1.

It is apparent from Fig. 1 that when the optical recording media of the present invention (Examples 1-3) are used, stable signal intensity can be obtained from the beginning of writing as compared with conventional optical recording medium.

The signals recorded on the media under the above-described coditions were erased when the media were irradiated with continuously transmitted laser beam. In the optical recording media of the present invention obtained in Example 1-3, information were re-recorded with the same procedure as described above to obtain distinct signals on the media where signals had been erased as described above.

## Claims

1. An optical recording medium comprising an optical recording layer containing a phthalocyanine dye, a naphthalocyanine dye or a mixture thereof and a layer for inhibiting the deformation of said optical recording layer in this order provided on a transparent substrate.

2. The optical recording medium as claimed in claim 1, wherein said layer for inhibiting the deformation of the optical recording layer composes of $SiO_2$, SiO, ZnO, $Si_3N_4$, AlN, TiN, SiC, TiC, a thermoplastic resin, a thermosetting resin, a chalcogen compound, a semiconductor or a metal.

3. The optical recording medium as claimed in claim 1, wherein said layer for inhibiting the deformation of the optical recording layer has a thickness of from 0.01 to 10 μm.

4. The optical recording medium as claimed in claim 1, wherein two or more layers of the layer for

inhibiting the deformation of the optical recording layer are formed on the optical recording layer.

5. The optical recording medium as claimed in claim 1, wherein said phthalocyanine dye or said naphthalocyanine dye is a compound represented by the following formula [I]

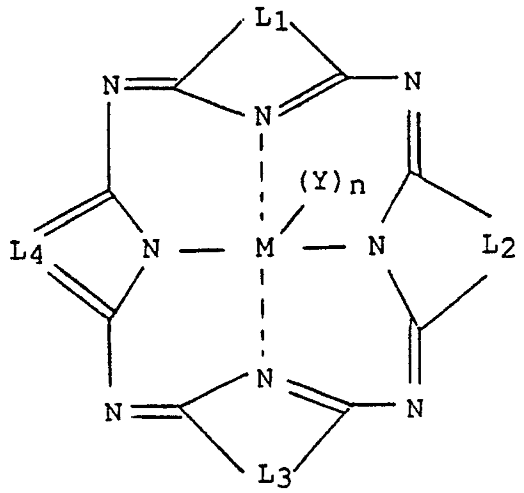

... [I]

wherein M represents a metal or semimetal, -Y represents an organic substituent group, n represent an integer of 1 or 2, and $L_1$, $L_2$, $L_3$ and $L_4$ represent each a benzene ring or naphthalene ring skeleton which is unsubstituted or substituted by one or more substituent groups -Z.

6. A process for the production of an optical recording medium characterized in that a phthalocyanine dye, a naphthalocyanine dye or a mixture thereof and a layer for inhibiting the deformation of said optical recording layer in this order is provided on a transparent substrate.

7. A process according to claim 6, wherein said layer for inhibiting the deformation of the optical recording layer composes of $SiO_2$, SiO, ZnO, $Si_3N_4$, AlN, TiN, SiC, TiC, a thermoplastic resin, a thermosetting resin, a chalcogen compound, a semiconductor or a metal.

8. A process according to claim 6, wherein said layer of inhibiting the deformation of the optical recording layer has a thickness of from 0.01 to 10 µm.

9. A process according to claim 6, wherein two or more layers of the layer for inhibiting the deformation of the optical recording layer are formed on the optical recording layer.

10. A process according to claim 6, wherein said phthalocyanine dye or said naphthalocyanine dye is a compound represented by the following formula [1].

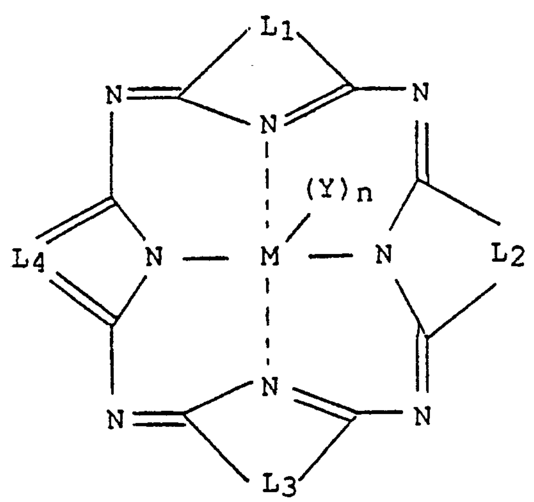

... [I]

wherein M represents a metal or semimetal, -Y represents an organic substituent group, n represent an integer of 1 or 2, and $L_1$, $L_2$, $L_3$ and $L_4$ represent each a benzene ring or naphthalene ring skeleton which is unsubstituted or substituted by one or more substituent groups -Z.

11. A process according to any of claims 6 to 10, wherein the recording layer formed on the transparent substrate is heat-treated at a temperature of from 80 to 280 °C, preferably from 100 to 250 °C by heating it from an external heat source.

12. A process according to any of claims 6 to 11, wherein the heating time is 30 seconds to 90 minutes.

13. A process according to any of claims 6 to 12, wherein the transparent substrate is coated with the dye solution by spin coating, dip coating or spray coating.

FIG. 1

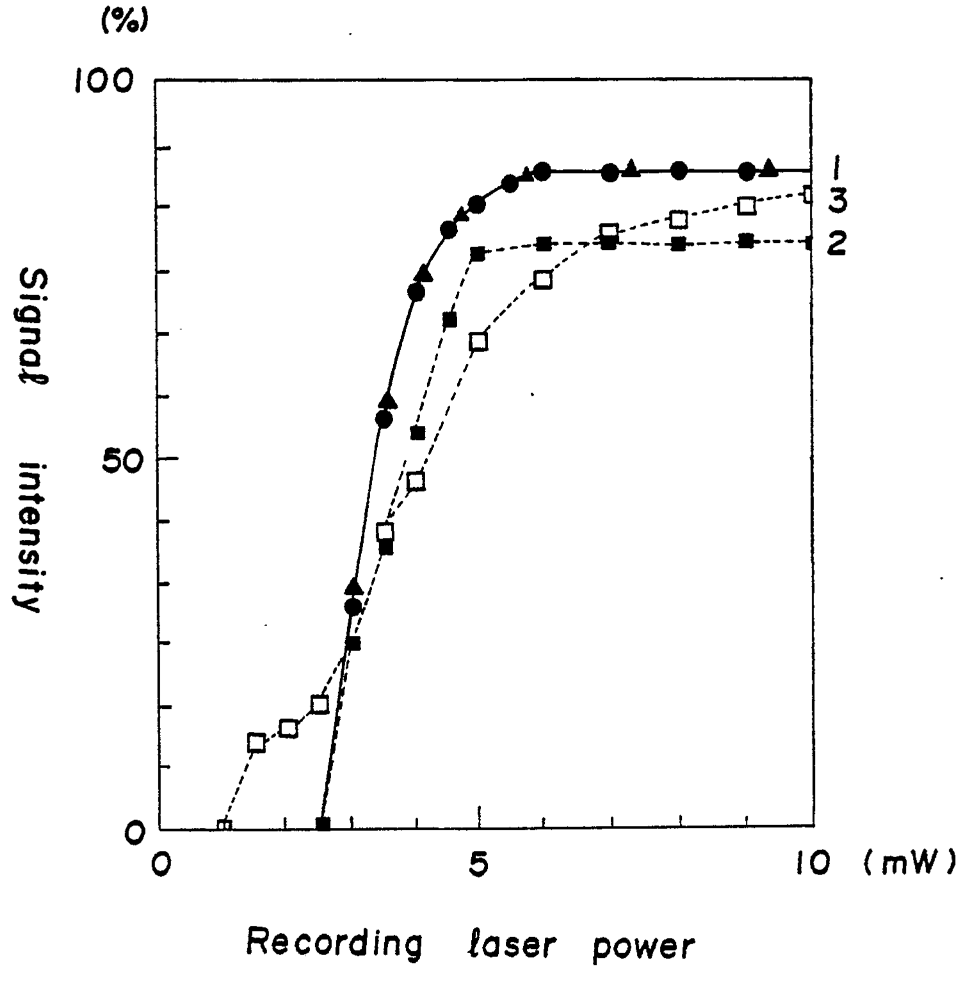


1 : Example 1(●), 3(▲)
2 : Example 2(■)
3 : Comparative Example 1(□)